# EUROPÄISCHE PATENTSCHRIFT

(11) **EP 4 171 979 B1**
(45) Veröffentlichungstag und Bekanntmachung des Hinweises auf die Patenterteilung: **28.08.2024**
(21) Anmeldenummer: 21731969.8
(22) Anmeldetag: 08.06.2021
(51) Int. Cl.: B60K 1/00, B60K 11/02, B60H 1/00

(54) **KRAFTFAHRZEUG-WÄRMETRANSPORTMITTELKREISLAUF**
HEAT TRANSFER MEDIUM CIRCUIT FOR A MOTOR VEHICLE
CIRCUIT D'AGENT CALOPORTEUR POUR UN VÉHICULE AUTOMOBILE

(30) Priorität: 25.06.2020 DE 102020207927
(43) Veröffentlichungstag der Anmeldung: 03.05.2023
(73) Patentinhaber: Vitesco Technologies GmbH, 93055 Regensburg (DE)
(72) Erfinder: ESER, Gerhard, 81737 München (DE); BRETTNER, Sebastian, 81737 München (DE); DILLINGER, Manuel, 81737 München (DE); FEULNER, Markus, 81737 München (DE)
(74) Vertreter: Vitesco Technologies
(86) Internationale Anmeldenummer: PCT/EP2021/065207
(87) Internationale Veröffentlichungsnummer: WO 2021/259623

(56) Entgegenhaltungen:
- EP-A1- 3 088 230
- CN-A- 108 284 728
- DE-A1- 102018 218 474
- US-A1- 2020 062 106
- US-B2- 8 448 696

## Beschreibung

Die vorliegende Erfindung betrifft einen Wärmetransportmittelkreislauf für ein Kraftfahrzeug, insbesondere einen Personenkraftwagen, ein Kraftfahrzeug, insbesondere einen Personenkraftwagen, mit dem Wärmetransportmittelkreislauf und ein Verfahren zum Betreiben des Kraftfahrzeugs. Ein Wärmetransportmittelkreislauf gemäß dem Oberbegriff des Anspruch 1 ist aus DE 10 2018 218474 bekannt.

Kraftfahrzeuge mit Fahrzeugantriebs-Elektromotoren benötigen elektrische Energiespeicher zur Versorgung der Elektromotoren.

Durch Erwärmen solcher Energiespeicher bei kalten Temperaturen kann die Leistungsfähigkeit, Zuverlässigkeit, Einsatzmöglichkeit und/oder Lebensdauer verbessert werden.

Aufgabe der vorliegenden Erfindung ist es, ein Kraftfahrzeug und/oder dessen Betrieb zu verbessern.

Diese Aufgabe wird durch einen Wärmetransportmittelkreislauf mit den Merkmalen des Anspruchs 1 gelöst. Ansprüche 9, 10 stellen ein Kraftfahrzeug mit einem hier beschriebenen Wärmetransportmittelkreislauf bzw. ein Verfahren zum Betreiben eines hier beschriebenen Kraftfahrzeugs unter Schutz. Die Unteransprüche betreffen vorteilhafte Weiterbildungen.

Nach einer Ausführung der vorliegenden Erfindung weist ein Wärmetransportmittelkreislauf für ein bzw. eines Kraftfahrzeug(s), in einer Ausführung für einen bzw. eines Personenkraftwagen(s), einen ersten Teilkreislauf auf, der seinerseits wenigstens eine Wärmevorrichtung, die den ersten Teilkreislauf durchströmendes Wärmetransportmittel erwärmt bzw. hierzu vorgesehen, insbesondere eingerichtet ist bzw. verwendet wird, und/oder wenigstens eine Kühlvorrichtung aufweist, die (das) den ersten Teilkreislauf durchströmende(s) Wärmetransportmittel abkühlt bzw. hierzu vorgesehen, insbesondere eingerichtet ist bzw. verwendet wird.

In einer Ausführung umfasst eine Wärmevorrichtung eine Brennkraftmaschine des Kraftfahrzeugs oder einen damit (thermisch) gekoppelten Wärmetauscher. Zusätzlich oder alternativ umfasst in einer Ausführung eine Wärmevorrichtung eine Brennstoffzelle des Kraftfahrzeugs oder einen damit (thermisch) gekoppelten Wärmetauscher. Zusätzlich oder alternativ umfasst in einer Ausführung eine Wärmevorrichtung einen elektrischen bzw. elektrisch betriebenen Heizer, beispielsweise PTC-Heizer, des Kraftfahrzeugs, insbesondere einer Motorheizung und/oder einer Fahrgastraumheizung, oder einen damit (thermisch) gekoppelten Wärmetauscher. Zusätzlich oder alternativ umfasst in einer Ausführung eine Wärmevorrichtung eine Wärmepumpe, insbesondere eine mit einem Kältemittelkreislauf (thermisch) gekoppelte Wärmepumpe, des Kraftfahrzeugs oder einen damit (thermisch) gekoppelten Wärmetauscher.

Nach einer Ausführung der vorliegenden Erfindung weist der Wärmetransportmittelkreislauf einen zweiten Teilkreislauf mit wenigstens einem elektrischen Energiespeicher auf, der wenigstens einen Elektromotor mit elektrischer Energie versorgt bzw. hierzu vorgesehen, insbesondere eingerichtet ist bzw. verwendet wird, welcher seinerseits das Kraftfahrzeug antreibt bzw. hierzu vorgesehen, insbesondere eingerichtet ist bzw. verwendet wird.

Nach einer Ausführung der vorliegenden Erfindung wird dieser elektrische Energiespeicher durch den zweiten Teilkreislauf durchströmendes Wärmetransportmittel erwärmt und/oder abgekühlt bzw. ist der Wärmetransportmittelkreislauf hierzu vorgesehen, insbesondere eingerichtet bzw. wird hierzu verwendet.

Nach einer Ausführung der vorliegenden Erfindung weist der Wärmetransportmittelkreislauf eine Mischvorrichtung auf, die selektiv in
- wenigstens einen ersten Betriebszustand, in dem die Mischvorrichtung einen ersten Anteil, der in einer Ausführung gleich Null sein kann, von aus dem ersten Teilkreislauf (in die Mischvorrichtung) einströmendem Wärmetransportmittel in den zweiten Teilkreislauf leitet und in einer Weiterbildung den Rest bzw. den zu dem ersten Anteil komplementären Anteil von aus dem ersten Teilkreislauf (in die Mischvorrichtung) einströmendem Wärmetransportmittel, in einer Ausführung also das gesamte aus dem ersten Teilkreislauf (in die Mischvorrichtung) einströmende Wärmetransportmittel, in den bzw. dem ersten Teilkreislauf (weiter- bzw. zurück)leitet; und
- wenigstens einen zweiten Betriebszustand schaltbar ist bzw. geschaltet wird, in dem die Mischvorrichtung einen von dem ersten Anteil verschiedenen zweiten Anteil, der insbesondere gleich 100% sein kann, von aus dem ersten Teilkreislauf (in die Mischvorrichtung) einströmendem Wärmetransportmittel, in einer Ausführung also das gesamte aus dem ersten Teilkreislauf (in die Mischvorrichtung) einströmende Wärmetransportmittel, in den zweiten Teilkreislauf leitet und aus dem zweiten Teilkreislauf (in die Mischvorrichtung) einströmendes Wärmetransportmittel, in einer Ausführung das gesamte aus dem zweiten Teilkreislauf (in die Mischvorrichtung) einströmende Wärmetransportmittel, in den ersten Teilkreislauf zurückführt bzw. -leitet, in einer Ausführung in voneinander getrennten Strömen bzw. Fluidpassagen.

Somit werden in einer Ausführung der erste und zweite Teilkreislauf durch die Mischvorrichtung in deren erstem Betriebszustand voneinander getrennt bzw. (strömungstechnisch) parallel geschaltet und im zweiten Betriebszustand (strömungstechnisch) in Serie geschaltet.

Hierdurch kann in einer Ausführung der Energiespeicher in dem zweiten Betriebszustand durch den ersten Teilkreislauf temperiert, in einer Ausführung erwärmt, und dadurch in einer Ausführung die Leistungsfähigkeit, Zuverlässigkeit, Einsatzmöglichkeit und/oder Lebensdauer und damit der Betrieb des Kraftfahrzeugs verbessert werden.

Nach einer Ausführung der vorliegenden Erfindung weist der erste Teilkreislauf wenigstens eine Fahrgastraum-Erwärmungsvorrichtung, die einen Fahrgastraum des Kraftfahrzeugs durch (das) den ersten Teilkreislauf durchströmende(s) Wärmetransportmittel erwärmt bzw. hierzu vorgesehen, insbesondere eingerichtet ist bzw. verwendet wird, und/oder wenigstens eine Fahrgastraum-Abkühlungsvorrichtung auf, die einen bzw. den Fahrgastraum des Kraftfahrzeugs durch (das) den ersten Teilkreislauf durchströmende(s) Wärmetransportmittel abkühlt bzw. hierzu vorgesehen, insbesondere eingerichtet ist bzw. verwendet wird.

Einer Ausführung der vorliegenden Erfindung liegt somit die Idee zugrunde, Wärmetransportmittel eines Fahrgastraum-Wärmetransportmittel(teil)kreislaufs zum Temperieren des Energiespeichers in dessen Wärmetransportmittel(teil)kreislauf zu leiten, insbesondere Wärmetransportmittel eines Fahrgastraum-Heizkreislaufs zum Erwärmen des Energiespeichers in dessen Wärmetransportmittel(teil)kreislauf zu leiten.

Dadurch kann, insbesondere im Vergleich zu einer (reinen) Wärmeübertragung von dem Fahrgastraum-Wärmetransportmittel(teil)kreislauf auf bzw. in den Wärmetransportmittel(teil)kreislauf des Energiespeichers nur durch Wärmetauscher, in einer Ausführung Baugröße und/oder -aufwand und/oder Leistungsfähigkeit, Zuverlässigkeit, Einsatzmöglichkeit und/oder Lebensdauer und damit der Betrieb des Kraftfahrzeugs verbessert werden.

Zusätzlich oder alternativ zu diesem Aspekt der Nutzung eines Fahrgastraum-Wärmetransportmittel(teil)kreislaufs ist bzw. wird die Mischvorrichtung nach einer Ausführung der vorliegenden Erfindung in wenigstens einen dritten Betriebszustand schaltbar bzw. geschaltet, in dem die Mischvorrichtung einen von dem ersten Anteil und zweiten verschiedenen dritten Anteil, der insbesondere zwischen dem ersten und zweiten Anteil liegen bzw. größer als 0(%) und/oder kleiner als 100% sein kann, von aus dem ersten Teilkreislauf (in die Mischvorrichtung) einströmendem Wärmetransportmittel in den zweiten Teilkreislauf leitet und aus dem zweiten Teilkreislauf (in die Mischvorrichtung) einströmendes Wärmetransportmittel in den ersten Teilkreislauf zurückführt bzw. -leitet.

In einer Ausführung leitet die Mischvorrichtung in diesem dritten Betriebszustand den zu dem dritten Anteil komplementären Anteil von aus dem ersten Teilkreislauf (in die Mischvorrichtung) einströmendem Wärmetransportmittel in den bzw. dem ersten Teilkreislauf (weiter- bzw. zurück) und/oder den Rest des aus dem zweiten Teilkreislauf (in die Mischvorrichtung) einströmendem Wärmetransportmittel, der nicht in den ersten Teilkreislauf geleitet wird, in den bzw. dem zweiten Teilkreislauf (weiter- bzw. zurück).

Einer Ausführung der vorliegenden Erfindung liegt somit die Idee zugrunde, einen Mischbetrieb, in einer Ausführung neben dem Parallel- und dem Serienbetrieb bzw. der Parallel- und Serienschaltung, vorzusehen, in dem (nur) ein Teil des Wärmetransportmittels aus dem ersten Teilkreislauf in den zweiten Teilkreislauf abgezweigt und mit Wärmetransportmittel des zweiten Teilkreislaufs gemischt wird.

Dadurch kann in einer Ausführung der Energiespeicher besser temperiert und so in einer Ausführung die Leistungsfähigkeit, Zuverlässigkeit, Einsatzmöglichkeit und/oder Lebensdauer und damit der Betrieb des Kraftfahrzeugs verbessert werden.

Fahrgastraum-Heizkreisläufe bzw. deren Wärmetransportmittel weisen oft eine höhere Temperatur auf als für ein Temperieren von elektrischen Energiespeichern bzw. für deren Heizkreisläufe vorteilhaft. Durch das vorgenannte Mischen bzw. Abzweigen von Teilströmen kann in einer Ausführung Wärmetransportmittel aus Fahrgastraum-Heizkreisläufen vorteilhaft zum Temperieren, insbesondere Heizen, von elektrischen Energiespeichern verwendet werden.

Entsprechend können die beiden Aspekte der Nutzung eines Fahrgastraum-Wärmetransportmittel(teil)kreislaufs und eines Mischens bzw. Abzweigens von Teilströmen in einer Ausführung besonders vorteilhaft kombiniert sein, ohne dass jedoch die Erfindung hierauf beschränkt wäre.

In einer Ausführung ist bzw. wird die Mischvorrichtung selektiv in verschiedene dritte Betriebszustände schaltbar bzw. geschaltet, in dem die Mischvorrichtung jeweils einen von dem ersten Anteil und zweiten Anteil sowie den dritten Anteilen der anderen dritten Betriebszustände verschiedenen dritten Anteil, der insbesondere jeweils zwischen dem ersten und zweiten Anteil liegen bzw. größer als 0(%) und/oder kleiner als 100% sein kann, von aus dem ersten Teilkreislauf (in die Mischvorrichtung) einströmendem Wärmetransportmittel in den zweiten Teilkreislauf leitet und aus dem zweiten Teilkreislauf (in die Mischvorrichtung) einströmendes Wärmetransportmittel in den ersten Teilkreislauf zurückführt bzw. -leitet.

In einer Ausführung leitet die Mischvorrichtung in diesem dritten Betriebszustand (jeweils) den zu dem (jeweiligen) dritten Anteil komplementären Anteil von aus dem ersten Teilkreislauf (in die Mischvorrichtung) einströmendem Wärmetransportmittel in den bzw. dem ersten Teilkreislauf (weiter- bzw. zurück) und/oder den Rest des aus dem zweiten Teilkreislauf (in die Mischvorrichtung) einströmendem Wärmetransportmittel, der nicht in den ersten Teilkreislauf geleitet wird, in den bzw. dem zweiten Teilkreislauf (weiter- bzw. zurück).

In einer Ausführung ist bzw. wird die Mischvorrichtung kontinuierlich zwischen wenigstens zwei der Betriebszustände verstellbar bzw. verstellt, in einer Ausführung kontinuierlich von dem ersten Betriebszustand in den bzw. einen der dritten und/oder von dem zweiten Betriebszustand in den bzw. einen der dritten und/oder von einem der dritten in einen anderen der dritten Betriebszustände.

Hierdurch kann in einer Ausführung das Temperieren, insbesondere Heizen, von elektrischen Energiespeichern (weiter) optimiert und dadurch in einer Ausführung die Leistungsfähigkeit, Zuverlässigkeit, Einsatzmöglichkeit und/oder Lebensdauer und damit der Betrieb des Kraftfahrzeugs verbessert werden.

In einer Ausführung beträgt der erste Anteil höchstens 10%, insbesondere höchstens 5%, in einer Weiterbildung 0%. Zusätzlich oder alternativ beträgt in einer Ausführung der zweite Anteil wenigstens 90%, insbesondere wenigstens 95%, in einer Weiterbildung 100%. Mit anderen Worten sind der erste und zweite Teilkreislauf durch die Mischvorrichtung in deren erstem Betriebszustand voneinander vollständig getrennt bzw. (strömungstechnisch) parallel geschaltet und im zweiten Betriebszustand (strömungstechnisch) in Serie (durch)geschaltet.

Zusätzlich oder alternativ beträgt in einer Ausführung der dritte Anteil des dritten Betriebszustands bzw. eines oder mehrerer der dritten Betriebszustände (jeweils) wenigstens 30% und/oder höchstens 70%. Zusätzlich oder alternativ beträgt in einer Ausführung der dritte Anteil wenigstens eines der dritten Betriebszustände (jeweils) mehr als 0% und weniger als 30% und/oder der dritte Anteil wenigstens eines der dritten Betriebszustände (jeweils) mehr als 70% und weniger als 100%.

Hierdurch kann in einer Ausführung das Temperieren, insbesondere Heizen, von elektrischen Energiespeichern (weiter) optimiert und dadurch in einer Ausführung die Leistungsfähigkeit, Zuverlässigkeit, Einsatzmöglichkeit und/oder Lebensdauer und damit der Betrieb des Kraftfahrzeugs verbessert werden.

In einer Ausführung weist die Mischvorrichtung wenigstens ein Mischventil auf, das, in einer Ausführung dessen Gehäuse, wenigstens einen ersten Einlass, durch den Wärmetransportmittel aus dem ersten Teilkreislauf (in die Mischvorrichtung bzw. das Mischventil) eingeführt wird bzw. einströmt bzw. der hierzu vorgesehen, insbesondere eingerichtet ist bzw. verwendet wird, wenigstens einen ersten Auslass, durch den Wärmetransportmittel (aus der Mischvorrichtung bzw. dem Mischventil) in den ersten Teilkreislauf ab- bzw. zurückgeführt wird bzw. der hierzu vorgesehen, insbesondere eingerichtet ist bzw. verwendet wird, wenigstens einen zweiten Einlass, durch den Wärmetransportmittel aus dem zweiten Teilkreislauf (in die Mischvorrichtung bzw. das Mischventil) eingeführt wird bzw. einströmt bzw. der hierzu vorgesehen, insbesondere eingerichtet ist bzw. verwendet wird, und wenigstens einen zweiten Auslass aufweist, durch den Wärmetransportmittel (aus der Mischvorrichtung bzw. dem Mischventil) in den zweiten Teilkreislauf ab- bzw. zurückgeführt wird bzw. der hierzu vorgesehen, insbesondere eingerichtet ist bzw. verwendet wird.

Das Mischventil, in einer Ausführung ein Ventil- bzw. Stellglied des Mischventils, ist bzw. wird, in einer Ausführung in dem Gehäuse, selektiv in, in einer Ausführung kontinuierlich zwischen,
- wenigstens eine(r) erste(n) Schaltstellung, in welcher der erste Einlass, in einer Ausführung nur, mit dem ersten Auslass (strömungstechnisch, insbesondere durch das Ventil- bzw. Stellglied) verbunden ist und der zweite Einlass, in einer Ausführung nur, mit dem zweiten Auslass (strömungstechnisch, insbesondere durch das Ventil- bzw. Stellglied) verbunden ist;
- wenigstens eine(r) zweite(n) Schaltstellung, in welcher der erste Einlass, in einer Ausführung nur, mit dem zweiten Auslass (strömungstechnisch, insbesondere durch das Ventil- bzw. Stellglied) verbunden ist und der zweite Einlass, in einer Ausführung nur, mit dem erste Auslass (strömungstechnisch, insbesondere durch das Ventil- bzw. Stellglied) verbunden ist; und
- eine(r) oder mehrere(n) Zwischenstellungen verstellbar, in einer Ausführung verdrehbar, bzw. verstellt, in einer Ausführung verdreht, in denen jeweils der erste Einlass mit dem ersten und zweiten Auslass (strömungstechnisch, insbesondere durch das Ventil- bzw. Stellglied) verbunden ist und der zweite Einlass mit dem ersten und zweiten Auslass (strömungstechnisch, insbesondere durch das Ventil- bzw. Stellglied) verbunden ist.

Hierdurch kann in einer Ausführung ein(e) besonders kompakte(r) Wärmetransportmittelkreislauf bzw. Mischvorrichtung realisiert werden.

In einer Ausführung weist die Mischvorrichtung wenigstens ein erstes Mehrwegeventil auf, das, in einer Ausführung dessen Gehäuse,
- wenigstens einen Einlass, durch den Wärmetransportmittel aus dem ersten Teilkreislauf (in die Mischvorrichtung bzw. das erste Mehrwegeventil) eingeführt wird bzw. einströmt bzw. der hierzu vorgesehen, insbesondere eingerichtet ist bzw. verwendet wird,
- wenigstens einen ersten Auslass, durch den Wärmetransportmittel (aus der Mischvorrichtung bzw. dem ersten Mehrwegeventil) in den ersten Teilkreislauf ab- bzw. zurückgeführt wird bzw. der hierzu vorgesehen, insbesondere eingerichtet ist bzw. verwendet wird, und
- wenigstens einen zweiten Auslass aufweist, durch den Wärmetransportmittel (aus der Mischvorrichtung bzw. dem ersten Mehrwegeventil) in den zweiten Teilkreislauf abgeführt wird bzw. der hierzu vorgesehen, insbesondere eingerichtet ist bzw. verwendet wird; und
- wenigstens ein, in einer Ausführung zu dem ersten Mehrwegeventil paralleles und/oder mit dem ersten Mehrwegeventil synchronisiertes, zweites Mehrwegeventil auf, das, in einer Ausführung dessen Gehäuse,
- wenigstens einen Einlass, durch den Wärmetransportmittel aus dem zweiten Teilkreislauf (in die Mischvorrichtung bzw. das zweite Mehrwegeventil) eingeführt wird bzw. einströmt bzw. der hierzu vorgesehen, insbesondere eingerichtet ist bzw. verwendet wird,
- wenigstens einen ersten Auslass, durch den Wärmetransportmittel (aus der Mischvorrichtung bzw. dem zweiten Mehrwegeventil) in den ersten Teilkreislauf abgeführt wird bzw. der hierzu vorgesehen, insbesondere eingerichtet ist bzw. verwendet wird, und
- wenigstens einen zweiten Auslass aufweist, durch den Wärmetransportmittel (aus der Mischvorrichtung bzw. dem zweiten Mehrwegeventil) in den zweiten Teilkreislauf ab- bzw. zurückgeführt wird bzw. der hierzu vorgesehen, insbesondere eingerichtet ist bzw. verwendet wird.

Das erste Mehrwegeventil, in einer Ausführung ein Ventil- bzw. Stellglied des ersten Mehrwegeventils, ist bzw. wird, in einer Ausführung in dessen Gehäuse, in, in einer Ausführung selektiv, insbesondere kontinuierlich zwischen,
- wenigstens eine(r) erste(n) Schaltstellung, in welcher der Einlass des ersten Mehrwegeventils, in einer Ausführung nur, mit dessen ersten Auslass (strömungstechnisch, insbesondere durch das Ventil- bzw. Stellglied) verbunden ist;
- wenigstens eine(r) zweite(n) Schaltstellung, in welcher der Einlass, in einer Ausführung nur, mit dem zweiten Auslass des ersten Mehrwegeventils (strömungstechnisch, insbesondere durch das Ventil- bzw. Stellglied) verbunden ist; und
- eine(r) oder mehrere(n) Zwischenstellungen verstellbar, in einer Ausführung verdrehbar, bzw. verstellt, in einer Ausführung verdreht, in denen jeweils der Einlass mit dem ersten und zweiten Auslass (strömungstechnisch, insbesondere durch das Ventil- bzw. Stellglied) verbunden ist.

Das zweite Mehrwegeventil, in einer Ausführung ein Ventil- bzw. Stellglied des zweiten Mehrwegeventils, ist bzw. wird, in einer Ausführung in dessen Gehäuse, in, in einer Ausführung selektiv, insbesondere kontinuierlich zwischen,
- wenigstens eine(r) erste(n) Schaltstellung, in welcher der Einlass des zweiten Mehrwegeventils, in einer Ausführung nur, mit dessen ersten Auslass (strömungstechnisch, insbesondere durch das Ventil- bzw. Stellglied) verbunden ist;
- wenigstens eine(r) zweite(n) Schaltstellung, in welcher der Einlass, in einer Ausführung nur, mit dem zweiten Auslass des zweiten Mehrwegeventils (strömungstechnisch, insbesondere durch das Ventil- bzw. Stellglied) verbunden ist; und
- eine(r) oder mehrere(n) Zwischenstellungen verstellbar, in einer Ausführung verdrehbar, bzw. verstellt, in einer Ausführung verdreht, in denen jeweils der Einlass mit dem ersten und zweiten Auslass (strömungstechnisch, insbesondere durch das Ventil- bzw. Stellglied) verbunden ist.

Hierdurch können in einer Ausführung einfache(re) Mehrwegeventile verwendet werden.

In einer Ausführung weist der Wärmetransportmittelkreislauf wenigstens einen Wärmetauscher auf, der Wärme zwischen dem ersten und zweiten Teilkreislauf überträgt bzw. hierzu vorgesehen, insbesondere eingerichtet ist bzw. verwendet wird.

Hierdurch kann in einer Ausführung das Temperieren, insbesondere Heizen, von elektrischen Energiespeichern (weiter) optimiert und dadurch in einer Ausführung die Leistungsfähigkeit, Zuverlässigkeit, Einsatzmöglichkeit und/oder Lebensdauer und damit der Betrieb des Kraftfahrzeugs verbessert werden.

In einer Ausführung weist der Wärmetransportmittelkreislauf einen dritten Teilkreislauf mit wenigstens einem Elektromotor auf, der durch den elektrischen Energiespeicher mit elektrischer Energie versorgt wird, das Kraftfahrzeug antreibt und durch den dritten Teilkreislauf durchströmendes Wärmetransportmittel erwärmt und/oder abgekühlt wird, bzw. ist der Wärmetransportmittelkreislauf bzw. Elektromotor, Energiespeicher bzw. dritter Teilkreislauf hierzu vorgesehen, insbesondere eingerichtet bzw. wird hierzu bzw. verwendet.

In einer Ausführung weist der Wärmetransportmittelkreislauf eine Schaltvorrichtung auf, die selektiv in
- wenigstens einen ersten Betriebszustand, in dem die Schaltvorrichtung einen ersten Anteil, der insbesondere auch gleich Null sein kann, von aus dem zweiten Teilkreislauf (in die Schaltvorrichtung) einströmendem Wärmetransportmittel in den dritten Teilkreislauf leitet und in einer Weiterbildung den Rest bzw. den zu dem ersten Anteil komplementären Anteil von aus dem zweiten Teilkreislauf (in die Schaltvorrichtung) einströmendem Wärmetransportmittel, in einer Ausführung also das gesamte aus dem zweiten Teilkreislauf (in die Schaltvorrichtung) einströmende Wärmetransportmittel, in den bzw. dem zweiten Teilkreislauf (weiter- bzw. zurück)leitet; und
- wenigstens einen zweiten Betriebszustand schaltbar ist bzw. geschaltet wird, in dem die Schaltvorrichtung einen von dem ersten Anteil verschiedenen zweiten Anteil, der insbesondere gleich 100% sein kann, von aus dem zweiten Teilkreislauf (in die Schaltvorrichtung) einströmendem Wärmetransportmittel, in einer Ausführung also das gesamte aus dem zweiten Teilkreislauf (in die Schaltvorrichtung) einströmende Wärmetransportmittel, in den dritten Teilkreislauf leitet und in einer Ausführung aus dem dritten Teilkreislauf (in die Schaltvorrichtung) einströmendes Wärmetransportmittel, in einer Ausführung das gesamte aus dem dritten Teilkreislauf (in die Schaltvorrichtung) einströmende Wärmetransportmittel, in den zweiten Teilkreislauf zurückführt bzw. -leitet, in einer Ausführung in voneinander getrennten Strömen bzw. Fluidpassagen.

Somit werden in einer Ausführung der zweite und dritte Teilkreislauf durch die Schaltvorrichtung in deren erstem Betriebszustand voneinander getrennt bzw. (strömungstechnisch) parallel geschaltet und im zweiten Betriebszustand (strömungstechnisch) in Serie geschaltet.

Hierdurch kann in einer Ausführung der Energiespeicher in dem zweiten Betriebszustand durch den dritten Teilkreislauf temperiert, in einer Ausführung erwärmt, und dadurch in einer Ausführung die Leistungsfähigkeit, Zuverlässigkeit, Einsatzmöglichkeit und/oder Lebensdauer und damit der Betrieb des Kraftfahrzeugs verbessert werden.

In einer Ausführung ist bzw. wird die Schaltvorrichtung in einer Ausführung selektiv in einen oder mehrere dritte Betriebszustände schaltbar bzw. geschaltet, in dem die Schaltvorrichtung (jeweils) einen von dem ersten Anteil und zweiten Anteil verschiedenen dritten Anteil, der insbesondere (jeweils) zwischen dem ersten und zweiten Anteil liegen bzw. größer als 0(%) und/oder kleiner als 100% und/oder von den dritten Anteilen der anderen dritten Betriebszustände verschieden sein kann, von aus dem zweiten Teilkreislauf (in die Schaltvorrichtung) einströmendem Wärmetransportmittel in den dritten Teilkreislauf leitet und aus dem dritten Teilkreislauf (in die Schaltvorrichtung) einströmendes Wärmetransportmittel in den zweiten Teilkreislauf zurückführt bzw. -leitet.

In einer Ausführung leitet die Schaltvorrichtung in diesem dritten Betriebszustand bzw. einem oder mehreren dieser dritten Betriebszustände (jeweils) den zu dem (jeweiligen) dritten Anteil komplementären Anteil von aus dem zweiten Teilkreislauf (in die Schaltvorrichtung) einströmendem Wärmetransportmittel in den bzw. dem zweiten Teilkreislauf (weiter- bzw. zurück) und/oder den Rest des aus dem dritten Teilkreislauf (in die Schaltvorrichtung) einströmendem Wärmetransportmittel, der nicht in den zweiten Teilkreislauf geleitet wird, in den bzw. dem dritten Teilkreislauf (weiter- bzw. zurück).

In einer Ausführung ist bzw. wird die Schaltvorrichtung kontinuierlich zwischen wenigstens zwei der Betriebszustände verstellbar bzw. verstellt, in einer Ausführung kontinuierlich von dem ersten Betriebszustand in den bzw. einen der dritten und/oder von dem zweiten Betriebszustand in den bzw. einen der dritten und/oder von einem der dritten in einen anderen der dritten.

Hierdurch können in einer Ausführung analoge Vorteile wie vorstehend mit Bezug auf den ersten Teilkreislauf beschrieben realisiert werden. Entsprechend kann auch die Schaltvorrichtung in einer Ausführung so realisiert sein, wie dies vorstehend mit Bezug auf die Mischvorrichtung erläutert wurde. Gleichermaßen kann in einer Ausführung die Schaltvorrichtung auch ein 4/2-Ventil oder dergleichen aufweisen, insbesondere sein.

Nach einer Ausführung der vorliegenden Erfindung weist das Kraftfahrzeug wenigstens einen Elektromotor, der das Kraftfahrzeug antreibt bzw. hierzu vorgesehen, insbesondere eingerichtet ist bzw. verwendet wird, sowie einen hier beschriebenen Wärmetransportmittelkreislauf auf, dessen wenigstens einer durch den zweiten Teilkreislauf durchströmendes Wärmetransportmittel erwärm- und/oder abkühlbarer elektrischer Energiespeicher diesen wenigstens einen Elektromotor mit elektrischer Energie versorgt bzw. hierzu vorgesehen, insbesondere eingerichtet ist bzw. verwendet wird.

In einer Ausführung ist das Kraftfahrzeug ein, in einer Ausführung reines, Elektrofahrzeug.

Hierfür kann die vorliegende Erfindung, insbesondere aufgrund der nicht zur Verfügung stehenden Abwärme von Antriebs-Brennkraftmaschinen oder dergleichen, mit besonderem Vorteil verwendet werden.

In einer anderen Ausführung weist das Kraftfahrzeug wenigstens eine Brennkraftmaschine zum Antreiben des Kraftfahrzeugs zusammen und/oder alternierend mit dem wenigstens einen Elektromotor auf, die in einer Ausführung eine Wärmevorrichtung zum Erwärmen von den ersten Teilkreislauf durchströmendem Wärmetransportmittel oder mit einer solchen (thermisch) gekoppelt sein kann. Zusätzlich oder alternativ weist das Kraftfahrzeug in einer Ausführung wenigstens eine Brennstoffzelle, in einer Ausführung zur Versorgung des wenigstens einen Elektromotors mit elektrischer Energie, auf, die in einer Ausführung eine Wärmevorrichtung zum Erwärmen von den ersten Teilkreislauf durchströmendem Wärmetransportmittel oder mit einer solchen (thermisch) gekoppelt sein kann.

Hierfür kann die vorliegende Erfindung, insbesondere aufgrund der Abwärme der Antriebs-Brennkraftmaschine bzw. Brennstoffzelle, mit besonderem Vorteil verwendet werden.

In einer Ausführung weist der erste Teilkreislauf und/oder der zweite Teilkreislauf und/oder der dritte Teilkreislauf (jeweils) wenigstens einen, in einer Ausführung elektrischen, Heizer, insbesondere einen PTC-Heizer oder dergleichen auf.

Hierdurch kann in einer Ausführung der Energiespeicher vorteilhaft erwärmt und dadurch in einer Ausführung die Leistungsfähigkeit, Zuverlässigkeit, Einsatzmöglichkeit und/oder Lebensdauer und damit der Betrieb des Kraftfahrzeugs verbessert werden.

Weitere Vorteile und Merkmale ergeben sich aus den Unteransprüchen und den Ausführungsbeispielen. Hierzu zeigt, teilweise schematisiert:
- Fig. 1:: einen Wärmetransportmittelkreislauf nach einer Ausführung der vorliegenden Erfindung;
- Fig. 2:: ein Mischventil des Wärmetransportmittelkreislaufs in verschiedenen Betriebszuständen bzw. (Schalt)Stellungen; und
- Fig. 3:: einen Wärmetransportmittelkreislauf nach einer weiteren Ausführung der vorliegenden Erfindung.

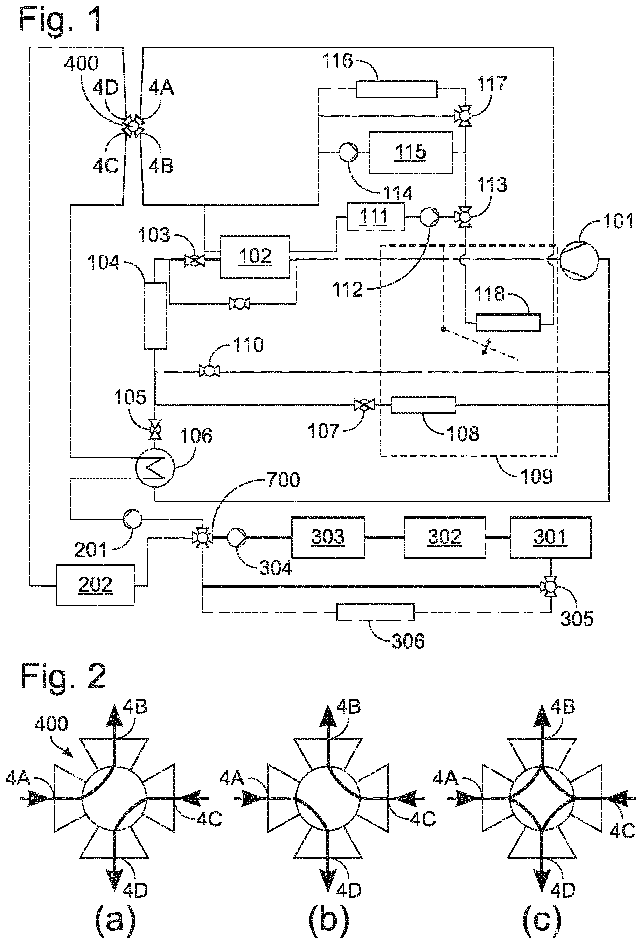

Fig. 1 zeigt einen Wärmetransportmittelkreislauf nach einer Ausführung der vorliegenden Erfindung.

Der Wärmetransportmittelkreislauf weist einen ersten Teilkreislauf mit einem Kompressor 101, einem Kondensator 102, einem Expansionsventil 103, einem fahrzeugfrontseitigen Wärmetauscher 104, einem weiteren Expansionsventil 105 und einem weiteren Wärmetauscher 106 auf, die in Serie geschaltet sind. Parallel zu Expansionsventil 105 und Wärmetauscher 106 sind ein weiteres Expansionsventil 107 und ein Klimaanlagenverdampfer 108 zum Abkühlen eines Fahrgastraums 109 in Serie miteinander geschaltet. Parallel hierzu ist ein Stellventil 110 geschaltet.

Ein mit einer Pumpe 112 und einem 3/2-Ventil 113 in Serie geschalteter PTC-Heizer 111, eine mit einer Pumpe 114 in Serie geschaltete Antriebs-Brennkraftmaschine 115 sowie ein Radiator 116 und ein Thermostat 117 sind mit- bzw. zueinander parallel geschaltet und in Serie mit einem Wärmetauscher 118 zum Erwärmen des Fahrgastraums 109 und dem Kondensator 102 geschaltet.

Der Wärmetransportmittelkreislauf weist weiter einen zweiten Teilkreislauf mit einer Pumpe 201 und einer Batterie 202 zur Versorgung eines Elektromotors 301 auf, der über den Wärmetauscher 106 mit dem ersten Teilkreislauf thermisch gekoppelt ist.

Der Wärmetransportmittelkreislauf weist weiter einen dritten Teilkreislauf mit dem Elektromotor 301, einer Leistungselektronik 302, einer Ladevorrichtung 303, einer Pumpe 304, einem 3/2-Ventil 305 und einem Radiator 306 auf.

Der Wärmetransportmittelkreislauf weist weiter eine Mischvorrichtung mit einem Mischventil 400 mit einem ersten Einlass 4A zum Einführen von Wärmetransportmittel aus dem ersten Teilkreislauf, einem ersten Auslass 4B zum Abführen von Wärmetransportmittel in den ersten Teilkreislauf, einem zweiten Einlass 4C zum Einführen von Wärmetransportmittel aus dem zweiten Teilkreislauf und einem zweiten Auslass 4D zum Abführen von Wärmetransportmittel in den zweiten Teilkreislauf auf, das in Fig. 2 in verschiedenen Betriebszuständen bzw. (Schalt)Stellungen dargestellt ist.

In einem ersten Betriebszustand bzw. einer ersten Schaltstellung (Fig. 2 (a)) ist der erste Einlass 4A (nur) mit dem ersten Auslass 4B verbunden und der zweite Einlass 4C (nur) mit dem zweiten Auslass 4D verbunden, so dass ein erster Anteil von 0% von aus dem ersten Teilkreislauf einströmendem Wärmetransportmittel in den zweiten Teilkreislauf und ein hierzu komplementärer Anteil von 100% in den ersten Teilkreislauf sowie das gesamte in Einlass 4C einströmende Wärmetransportmittel aus dem zweiten Auslass 4D in den zweiten Teilkreislauf geleitet wird, d.h. der erste und zweite Teilkreislauf voneinander strömungstechnisch getrennt bzw. parallel geschaltet sind.

In einem zweiten Betriebszustand bzw. einer zweiten Schaltstellung (Fig. 2 (b)) ist der erste Einlass 4A (nur) mit dem zweiten Auslass 4D verbunden und der zweite Einlass 4C (nur) mit dem ersten Auslass 4B verbunden, so dass ein zweiter Anteil von 100% von aus dem ersten Teilkreislauf einströmendem Wärmetransportmittel in den zweiten Teilkreislauf sowie das gesamte in Einlass 4C einströmende Wärmetransportmittel aus dem ersten Auslass 4B in den ersten Teilkreislauf geleitet wird, d.h. der erste und zweite Teilkreislauf in Serie geschaltet sind.

In mehreren dritten Betriebszuständen bzw. Zwischenstellungen, von denen eine in Fig. 2 (c) gezeigt ist, ist der erste Einlass 4A mit dem ersten Auslass 4B und dem zweiten Auslass 4D verbunden und der zweite Einlass 4C mit dem ersten Auslass 4B und dem zweiten Auslass 4D verbunden, so dass je nach Schaltstellung des Mischventils 400 verschiedene dritte Anteile, beispielsweise 30%, 50% oder 70%, von aus dem ersten Teilkreislauf einströmendem Wärmetransportmittel in den zweiten Teilkreislauf geleitet werden, d.h. ein Teil des Wärmetransportmittels des ersten Teilkreislaufs in den zweiten Teilkreislauf abgezweigt und mit diesem gemischt wird.

Der dritte Teilkreislauf kann durch eine Schaltvorrichtung mit einem 4/2-Ventil 700, welche(s) selektiv in einen ersten Betriebszustand zum Leiten eines ersten Anteils von 0% aus dem zweiten Teilkreislauf einströmendem Wärmetransportmittel in den dritten Teilkreislauf und einen zweiten Betriebszustand zum Leiten eines von dem ersten Anteil verschiedenen zweiten Anteils von 100% von aus dem zweiten Teilkreislauf einströmendem Wärmetransportmittel in den dritten Teilkreislauf schaltbar ist, selektiv mit dem zweiten Teilkreislauf in Serie geschaltet oder von diesem getrennt werden.

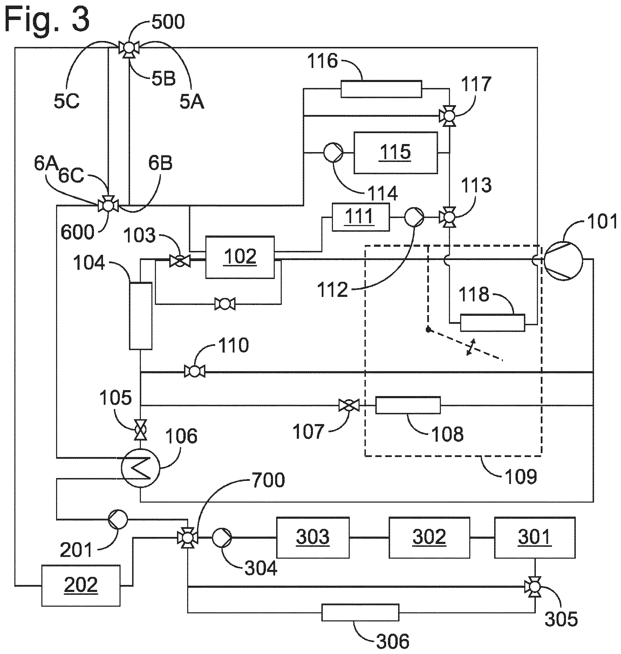

Fig. 3 zeigt einen Wärmetransportmittelkreislauf nach einer weiteren Ausführung der vorliegenden Erfindung in Fig. 1 entsprechender Darstellung. Einander entsprechende Merkmale sind durch identische Bezugszeichen identifiziert, so dass auf die vorstehende Beschreibung Bezug genommen und nachfolgend nur auf Unterschiede eingegangen wird.

In der Ausführung der Fig. 3 weist die Mischvorrichtung anstelle des Mischventils 400 zwei parallele und miteinander synchronisierte Mehrwegeventile 500, 600 auf.

Das erste Mehrwegeventil 500 weist einen Einlass 5A zum Einführen von Wärmetransportmittel aus dem ersten Teilkreislauf, einen ersten Auslass 5B zum Abführen von Wärmetransportmittel in den ersten Teilkreislauf und einen zweiten Auslass 5C zum Abführen von Wärmetransportmittel in den zweiten Teilkreislauf auf.

Das zweite Mehrwegeventil 600 weist einen Einlass 6A zum Einführen von Wärmetransportmittel aus dem zweiten Teilkreislauf, einen ersten Auslass 6B zum Abführen von Wärmetransportmittel in den ersten Teilkreislauf und einen zweiten Auslass 6C zum Abführen von Wärmetransportmittel in den zweiten Teilkreislauf auf.

In einer ersten Schaltstellung des ersten Mehrwegeventils 500 ist dessen Einlass 5A nur mit dem ersten Auslass 5B verbunden, in einer zweiten Schaltstellung der Einlass 5A nur mit dem zweiten Auslass 5C verbunden, und in mehreren Zwischenstellungen jeweils der Einlass 5A mit dem ersten und zweiten Auslass 5B, 5C verbunden, wobei in den verschiedenen Zwischenstellungen unterschiedliche Anteile des durch den Einlass 5A einströmenden Wärmetransportmittels in bzw. durch den ersten Auslass 5B und der Rest bzw. komplementäre Anteil jeweils in bzw. durch den zweiten Auslass 5C geleitet werden, beispielsweise in einer Zwischenstellung 30% in bzw. durch 5B und 70% in bzw. durch 5C, in einer (anderen) Zwischenstellung 50% in bzw. durch 5B und 50% in bzw. durch 5C, und/oder in einer (anderen) Zwischenstellung 70% in bzw. durch 5B und 30% in bzw. durch 5C.

In einer ersten Schaltstellung des zweiten Mehrwegeventils 600 ist dessen Einlass 6A nur mit dem ersten Auslass 6B verbunden, in einer zweiten Schaltstellung der Einlass 6A nur mit dem zweiten Auslass 6C verbunden, und in mehreren Zwischenstellungen jeweils der Einlass 6A mit dem ersten und zweiten Auslass 6B, 6C verbunden, wobei in den verschiedenen Zwischenstellungen unterschiedliche Anteile des durch den Einlass 6A einströmenden Wärmetransportmittels in bzw. durch den ersten Auslass 6B und der Rest bzw. komplementäre Anteil jeweils in bzw. durch den zweiten Auslass 6C geleitet werden, beispielsweise in einer Zwischenstellung 30% in bzw. durch 6B und 70% in bzw. durch 6C, in einer (anderen) Zwischenstellung 50% in bzw. durch 6B und 50% in bzw. durch 6C, und/oder in einer (anderen) Zwischenstellung 70% in bzw. durch 6B und 30% in bzw. durch 6C.

Auf diese Weise kann analog der erste und zweite Teilkreislauf voneinander getrennt (erstes Mehrwegeventil 500: erste Schaltstellung 5A→5B; zweites Mehrwegeventil 600: zweite Schaltstellung 6A→6C) bzw. in Serie (erstes Mehrwegeventil 500: zweite Schaltstellung 5A→5C; zweites Mehrwegeventil 600: erste Schaltstellung 6A→6B) geschaltet bzw. ein Teil des Wärmetransportmittels des ersten Teilkreislaufs in den zweiten Teilkreislauf abgezweigt und mit diesem gemischt (erstes Mehrwegeventil 500: Zwischenstellung 5A->5B, 5C; zweites Mehrwegeventil 600: Zwischenstellung 6A->6B, 6C) werden.

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

### Bezugszeichenliste

- 4A: erster Mischventil-Einlass
- 4B: erster Mischventil-Auslass
- 4C: zweiter Mischventil-Einlass
- 4D: zweiter Mischventil-Auslass
- 5A: Einlass des ersten Mehrwegeventils
- 5B: erster Auslass des ersten Mehrwegeventils
- 5C: zweiter Auslass des ersten Mehrwegeventils
- 6A: Einlass des zweiten Mehrwegeventils
- 6B: erster Auslass des zweiten Mehrwegeventils
- 6C: zweiter Auslass des zweiten Mehrwegeventils
- 101: Kompressor
- 102: Kondensator
- 103: Expansionsventil
- 104: Wärmetauscher
- 105: Expansionsventil
- 106: Wärmetauscher
- 107: Expansionsventil
- 108: Klimaanlagenverdampfer
- 109: Fahrgastraum
- 110: Stellventil
- 111: PTC-Heizer
- 112: Pumpe
- 113: 3/2-Ventil
- 114: Pumpe
- 115: Antriebs-Brenkraftmaschine
- 116: Radiator
- 117: Thermostat
- 118: Wärmetauscher
- 201: Pumpe
- 202: Batterie
- 301: Elektromotor
- 302: Leistungselektronik
- 303: Ladevorrichtung
- 304: Pumpe
- 305: 3/2-Ventil
- 306: Radiator
- 400: Mischventil
- 500: erstes Mehrwegeventil
- 600: zweites Mehrwegeventil
- 700: 4/2-Ventil

## Patentansprüche

1. Wärmetransportmittelkreislauf für ein Kraftfahrzeug, insbesondere einen Personenkraftwagen, wobei der Wärmetransportmittelkreislauf aufweist:
- einen ersten Teilkreislauf mit wenigstens einer Wärmevorrichtung (111, 115) zum Erwärmen von den ersten Teilkreislauf durchströmendem Wärmetransportmittel und/oder wenigstens einer Kühlvorrichtung (104) zum Abkühlen von den ersten Teilkreislauf durchströmendem Wärmetransportmittel;
- einen zweiten Teilkreislauf mit wenigstens einem durch den zweiten Teilkreislauf durchströmendes Wärmetransportmittel erwärm- und/oder abkühlbaren elektrischen Energiespeicher (202) zur Versorgung wenigstens eines Elektromotors (301) zum Antreiben des Kraftfahrzeugs; und
- eine Mischvorrichtung (400; 500, 600), die selektiv in
- wenigstens einen ersten Betriebszustand zum Leiten eines ersten Anteils von aus dem ersten Teilkreislauf einströmendem Wärmetransportmittel in den zweiten Teilkreislauf; und
- wenigstens einen zweiten Betriebszustand zum Leiten eines von dem ersten Anteil verschiedenen zweiten Anteils von aus dem ersten Teilkreislauf einströmendem Wärmetransportmittel in den zweiten Teilkreislauf und Zurückführen von aus dem zweiten Teilkreislauf einströmendem Wärmetransportmittel in den ersten Teilkreislauf
schaltbar ist,
wobei
- die Mischvorrichtung in wenigstens einen dritten Betriebszustand zum Leiten eines von dem ersten und zweiten Anteil verschiedenen dritten Anteils von aus dem ersten Teilkreislauf einströmendem Wärmetransportmittel in den zweiten Teilkreislauf und Zurückführen von aus dem zweiten Teilkreislauf einströmendem Wärmetransportmittel in den ersten Teilkreislauf schaltbar ist; und/oder
- der erste Teilkreislauf wenigstens eine Fahrgastraum-Erwärmungsvorrichtung (118) zum Erwärmen eines Fahrgastraums durch den ersten Teilkreislauf durchströmendes Wärmetransportmittel und/oder wenigstens eine Fahrgastraum-Abkühlungsvorrichtung (108) zum Abkühlen eines Fahrgastraums durch den ersten Teilkreislauf durchströmendes Wärmetransportmittel aufweist.

2. Wärmetransportmittelkreislauf nach Anspruch 1, **dadurch gekennzeichnet, dass** die Mischvorrichtung selektiv in verschiedene dritte Betriebszustände zum Leiten jeweils eines von dem ersten und zweiten Anteil sowie den dritten Anteilen der anderen dritten Betriebszustände verschiedenen dritten Anteils von aus dem ersten Teilkreislauf einströmendem Wärmetransportmittel in den zweiten Teilkreislauf und Zurückführen von aus dem zweiten Teilkreislauf einströmendem Wärmetransportmittel in den ersten Teilkreislauf schaltbar, insbesondere kontinuierlich zwischen wenigstens zwei der Betriebszustände verstellbar ist.

3. Wärmetransportmittelkreislauf nach einem der vorhergehenden Ansprüche, **dadurch gekennzeichnet, dass** der erste Anteil höchstens 10% beträgt, insbesondere gleich 0% ist, und/oder der zweite Anteil wenigstens 90% beträgt, insbesondere gleich 100% ist, und/oder der dritte Anteil wenigstens eines dritten Betriebszustands wenigstens 30% und/oder höchstens 70% beträgt.

4. Wärmetransportmittelkreislauf nach einem der vorhergehenden Ansprüche, **dadurch gekennzeichnet, dass** die Mischvorrichtung wenigstens ein Mischventil (400) mit
- wenigstens einem ersten Einlass (4A) zum Einführen von Wärmetransportmittel aus dem ersten Teilkreislauf;
- wenigstens einem ersten Auslass (4B) zum Abführen von Wärmetransportmittel in den ersten Teilkreislauf;
- wenigstens einem zweiten Einlass (4C) zum Einführen von Wärmetransportmittel aus dem zweiten Teilkreislauf; und
- wenigstens einem zweiten Auslass (4D) zum Abführen von Wärmetransportmittel in den zweiten Teilkreislauf aufweist, das in
- wenigstens eine erste Schaltstellung, in welcher der erste Einlass mit dem ersten Auslass verbunden ist und der zweite Einlass mit dem zweiten Auslass verbunden ist;
- wenigstens eine zweite Schaltstellung, in welcher der erste Einlass mit dem zweiten Auslass verbunden ist und der zweite Einlass mit dem ersten Auslass verbunden ist; und
- eine oder mehrere Zwischenstellungen verstellbar ist, in denen jeweils der erste Einlass mit dem ersten und zweiten Auslass verbunden ist und der zweite Einlass mit dem ersten und zweiten Auslass verbunden ist; insbesondere ein Ventilglied aufweist, welches, insbesondere kontinuierlich, zwischen der ersten Schaltstellung, zweiten Schaltstellung und der bzw. den Zwischenstellungen verstellbar, insbesondere verdrehbar, ist.

5. Wärmetransportmittelkreislauf nach einem der vorhergehenden Ansprüche, **dadurch gekennzeichnet, dass** die Mischvorrichtung
wenigstens ein erstes Mehrwegeventil (500) mit
- wenigstens einem Einlass (5A) zum Einführen von Wärmetransportmittel aus dem ersten Teilkreislauf;
- wenigstens einem ersten Auslass (5B) zum Abführen von Wärmetransportmittel in den ersten Teilkreislauf; und
- wenigstens einem zweiten Auslass (5C) zum Abführen von Wärmetransportmittel in den zweiten Teilkreislauf; und
wenigstens ein, insbesondere zu dem ersten Mehrwegeventil paralleles und/oder mit dem ersten Mehrwegeventil synchronisiertes, zweites Mehrwegeventil (600) mit
- wenigstens einem Einlass (6A) zum Einführen von Wärmetransportmittel aus dem zweiten Teilkreislauf;
- wenigstens einem ersten Auslass (6B) zum Abführen von Wärmetransportmittel in den ersten Teilkreislauf; und
- wenigstens einem zweiten Auslass (6C) zum Abführen von Wärmetransportmittel in den zweiten Teilkreislauf;
aufweist,
wobei das erste Mehrwegeventil in
- wenigstens eine erste Schaltstellung, in welcher sein Einlass mit seinem ersten Auslass verbunden ist;
- wenigstens eine zweite Schaltstellung, in welcher sein Einlass mit seinem zweiten Auslass verbunden ist; und
- eine oder mehrere Zwischenstellungen verstellbar ist, in denen jeweils sein Einlass mit seinem ersten und zweiten Auslass verbunden ist schaltbar ist, insbesondere ein Ventilglied aufweist, welches, insbesondere kontinuierlich, zwischen der ersten Schaltstellung, zweiten Schaltstellung und der bzw. den Zwischenstellungen verstellbar, insbesondere verdrehbar, ist; und
das zweite Mehrwegeventil in
- wenigstens eine erste Schaltstellung, in welcher sein Einlass mit seinem ersten Auslass verbunden ist;
- wenigstens eine zweite Schaltstellung, in welcher sein Einlass mit seinem zweiten Auslass verbunden ist; und
- eine oder mehrere Zwischenstellungen verstellbar ist, in denen jeweils sein Einlass mit seinem ersten und zweiten Auslass verbunden ist schaltbar ist, insbesondere ein Ventilglied aufweist, welches, insbesondere kontinuierlich, zwischen der ersten Schaltstellung, zweiten Schaltstellung und der bzw. den Zwischenstellungen verstellbar, insbesondere verdrehbar, ist.

6. Wärmetransportmittelkreislauf nach einem der vorhergehenden Ansprüche, **gekennzeichnet durch** wenigstens einen Wärmetauscher (106) zum Übertragen von Wärme zwischen dem ersten und zweiten Teilkreislauf.

7. Wärmetransportmittelkreislauf nach einem der vorhergehenden Ansprüche, **gekennzeichnet durch**
- einen dritten Teilkreislauf mit wenigstens einem durch den dritten Teilkreislauf durchströmendes Wärmetransportmittel erwärm- und/oder abkühlbaren und durch den elektrischen Energiespeicher mit elektrischen Energie versorgbaren Elektromotor (301) zum Antreiben des Kraftfahrzeugs; und
- eine Schaltvorrichtung (700), die selektiv in
- wenigstens einen ersten Betriebszustand zum Leiten eines ersten Anteils von aus dem zweiten Teilkreislauf einströmendem Wärmetransportmittel in den dritten Teilkreislauf; und
- wenigstens einen zweiten Betriebszustand zum Leiten eines von dem ersten Anteil verschiedenen zweiten Anteils von aus dem zweiten Teilkreislauf einströmendem Wärmetransportmittel in den dritten T ei lkreislauf;
schaltbar ist.

8. Wärmetransportmittelkreislauf nach Anspruch 7, **dadurch gekennzeichnet, dass** die Schaltvorrichtung selektiv in wenigstens einen dritten Betriebszustand zum Leiten eines von dem ersten und zweiten Anteil verschiedenen dritten Anteils von aus dem zweiten Teilkreislauf einströmendem Wärmetransportmittel in den dritten Teilkreislauf schaltbar ist, insbesondere selektiv in verschiedene dritte Betriebszustände zum Leiten jeweils eines von dem ersten und zweiten Anteil sowie den dritten Anteilen der anderen dritten Betriebszustände verschiedenen dritten Anteils von aus dem zweiten Teilkreislauf einströmendem Wärmetransportmittel in den dritten Teilkreislauf schaltbar und/oder kontinuierlich zwischen wenigstens zwei der Betriebszustände verstellbar ist.

9. Kraftfahrzeug, insbesondere Personenkraftwagen, das aufweist:
- wenigstens einen Elektromotor (301) zum Antreiben des Kraftfahrzeugs;
- einen Wärmetransportmittelkreislauf nach einem der vorhergehenden Ansprüche;
- keine oder wenigstens eine Brennkraftmaschine (115) zum Antreiben des Kraftfahrzeugs; und
- keine oder wenigstens eine Brennstoffzelle, insbesondere zur Versorgung des Elektromotors.

10. Verfahren zum Betreiben eines Kraftfahrzeugs nach Anspruch 9, **dadurch gekennzeichnet, dass** die Mischvorrichtung (400; 500, 600) in den ersten Betriebszustand und den zweiten Betriebszustand geschaltet wird.

11. Verfahren nach Anspruch 10, **dadurch gekennzeichnet, dass** die Mischvorrichtung in den wenigstens einen dritten Betriebszustand, insbesondere in mehrere der dritten Betriebszustände, geschaltet wird.

## Claims

1. Heat-transport-medium circuit for a motor vehicle, in particular a passenger motor vehicle, wherein the heat-transport-medium circuit has:
- a first partial circuit with at least one heating device (111, 115) for heating heat-transport medium flowing through the first partial circuit and/or with at least one cooling device (104) for cooling heat-transport medium flowing through the first partial circuit;
- a second partial circuit with at least one electrical energy store (202) which is able to be heated and/or cooled by heat-transport medium flowing through the second partial circuit and which serves for providing a supply to at least one electric motor (301) for driving the motor vehicle; and
- a mixing device (400; 500, 600) able to be switched selectively into
- at least one first operating state for conducting into the second partial circuit a first fraction of heat-transport medium flowing in from the first partial circuit; and
- at least one second operating state for conducting into the second partial circuit a second fraction, different from the first fraction, of heat-transport medium flowing in from the first partial circuit and for returning into the first partial circuit heat-transport medium flowing in from the second partial circuit,
wherein
- the mixing device is able to be switched into at least one third operating state for conducting into the second partial circuit a third fraction, different from the first and second fractions, of heat-transport medium flowing in from the first partial circuit and for returning into the first partial circuit heat-transport medium flowing in from the second partial circuit; and/or
- the first partial circuit has at least one passenger-compartment heating device (118) for heating a passenger compartment by way of heat-transport medium flowing through the first partial circuit, and/or at least
one passenger-compartment cooling device (108) for cooling a passenger compartment by way of heat-transport medium flowing through the first partial circuit.

2. Heat-transport-medium circuit according to Claim 1, **characterized in that** the mixing device is able to be switched selectively into different third operating states for conducting into the second partial circuit a respective third fraction, different from the first and second fractions and from the third fractions of the other third operating states, of heat-transport medium flowing in from the first partial circuit and for returning into the first partial circuit heat-transport medium flowing in from the second partial circuit, in particular is adjustable continuously between at least two of the operating states.

3. Heat-transport-medium circuit according to either of the preceding claims, **characterized in that** the first fraction is at most 10%, in particular is equal to 0%, and/or the second fraction is at least 90%, in particular is equal to 100%, and/or the third fraction of at least one third operating state is at least 30% and/or at most 70%.

4. Heat-transport-medium circuit according to one of the preceding claims, **characterized in that** the mixing device has at least one mixing valve (400) with
- at least one first inlet (4A) for introducing heat-transport medium from the first partial circuit;
- at least one first outlet (4B) for discharging heat-transport medium into the first partial circuit;
- at least one second inlet (4C) for introducing heat-transport medium from the second partial circuit; and
- at least one second outlet (4D) for discharging heat-transport medium into the second partial circuit, which mixing valve is adjustable into
- at least one first switching position, in which the first inlet is connected to the first outlet and the second inlet is connected to the second outlet;
- at least one second switching position, in which the first inlet is connected to the second outlet and the second inlet is connected to the first outlet; and
- one or more intermediate positions, in which in each case the first inlet is connected to the first and second outlets and the second inlet is connected to the first and second outlets;
in particular has a valve member which is adjustable, in particular rotatable, in particular continuously, between the first switching position, the second switching position and the intermediate position(s).

5. Heat-transport-medium circuit according to one of the preceding claims, **characterized in that** the mixing device has
at least one first multi-way valve (500) with
- at least one inlet (5A) for introducing heat-transport medium from the first partial circuit;
- at least one first outlet (5B) for discharging heat-transport medium into the first partial circuit; and
- at least one second outlet (5C) for discharging heat-transport medium into the second partial circuit; and has at least one second multi-way valve (600), in particular parallel to the first multi-way valve and/or synchronized with the first multi-way valve, with
- at least one inlet (6A) for introducing heat-transport medium from the second partial circuit;
- at least one first outlet (6B) for discharging heat-transport medium into the first partial circuit; and
- at least one second outlet (6C) for discharging heat-transport medium into the second partial circuit,
wherein the first multi-way valve is adjustable into
- at least one first switching position, in which its inlet is connected to its first outlet;
- at least one second switching position, in which its inlet is connected to its second outlet; and
- one or more intermediate positions, in which in each case its inlet is connected to its first and second outlets, in particular has a valve member which is adjustable, in particular rotatable, in particular continuously, between the first switching position, the second switching position and the intermediate position(s); and
the second multi-way valve is adjustable into
- at least one first switching position, in which its inlet is connected to its first outlet;
- at least one second switching position, in which its inlet is connected to its second outlet; and
- one or more intermediate positions, in which in each case its inlet is connected to its first and second outlets, in particular has a valve member which is adjustable, in particular rotatable, in particular continuously, between the first switching position, the second switching position and the intermediate position(s) .

6. Heat-transport-medium circuit according to one of the preceding claims, **characterized by** at least one heat exchanger (106) for transferring heat between the first and second partial circuits.

7. Heat-transport-medium circuit according to one of the preceding claims, **characterized by**
- a third partial circuit with at least one electric motor (301) which is able to be heated and/or cooled by heat-transport medium flowing through the third partial circuit and which is able to be supplied with electrical energy by the electrical energy store and which serves for driving the motor vehicle;
and
- a switching device (700) able to be switched selectively into
- at least one first operating state for conducting into the third partial circuit a first fraction of heat-transport medium flowing in from the second partial circuit; and
- at least one second operating state for conducting into the third partial circuit a second fraction, different from the first fraction, of heat-transport medium flowing in from the second partial circuit.

8. Heat-transport-medium circuit according to Claim 7, **characterized in that** the switching device is able to be switched selectively into at least one third operating state for conducting into the third partial circuit a third fraction, different from the first and second fractions, of heat-transport medium flowing in from the second partial circuit, in particular is able to be switched selectively into different third operating states for conducting into the third partial circuit a respective third fraction, different from the first and second fractions and from the third fractions of the other third operating states, of heat-transport medium flowing in from the second partial circuit and/or is adjustable continuously between at least two of the operating states.

9. Motor vehicle, in particular passenger motor vehicle, having:
- at least one electric motor (301) for driving the motor vehicle;
- a heat-transport-medium circuit according to one of the preceding claims;
- no or at least one internal combustion engine (115) for driving the motor vehicle; and
- no or at least one fuel cell, in particular for providing a supply to the electric motor.

10. Method for operating a motor vehicle according to Claim 9, **characterized in that** the mixing device (400; 500, 600) is switched into the first operating state and the second operating state.

11. Method according to Claim 10, **characterized in that** the mixing device is switched into the at least one third operating state, in particular into a plurality of the third operating states.

## Revendications

1. Circuit d'agent caloporteur pour un véhicule automobile, en particulier une voiture de tourisme, le circuit d'agent caloporteur comprenant :
- un premier sous-circuit avec au moins un dispositif de chauffage (111, 115) pour chauffer l'agent caloporteur circulant dans le premier sous-circuit et/ou au moins un dispositif de refroidissement (104) pour refroidir l'agent caloporteur circulant dans le premier sous-circuit ;
- un deuxième sous-circuit avec au moins un accumulateur d'énergie électrique (202) apte à être chauffé et/ou refroidi par l'agent caloporteur traversant le deuxième sous-circuit pour alimenter au moins un moteur électrique (301) destiné à entraîner le véhicule automobile ; et
- un dispositif de mélange (400 ; 500, 600) qui est apte à être placé sélectivement dans
- au moins un premier état de fonctionnement pour diriger dans le deuxième sous-circuit une première partie de l'agent caloporteur s'écoulant du premier sous-circuit ; et
- au moins un deuxième état de fonctionnement pour diriger dans le deuxième sous-circuit une deuxième partie, différente de la première partie, de l'agent caloporteur s'écoulant du premier sous-circuit et pour renvoyer dans le premier sous-circuit l'agent caloporteur s'écoulant du deuxième sous-circuit, dans lequel
- le dispositif de mélange est apte à être commuté dans au moins un troisième état de fonctionnement pour diriger dans le deuxième sous-circuit une troisième partie, différente de la première et de la deuxième partie, de l'agent caloporteur s'écoulant du premier sous-circuit, et pour renvoyer dans le premier sous-circuit l'agent caloporteur s'écoulant du deuxième sous-circuit ; et/ou
- le premier sous-circuit présente au moins un dispositif (118) de chauffage de l'habitacle pour chauffer un habitacle par l'agent caloporteur circulant dans le premier sous-circuit et/ou au moins un dispositif (108) de refroidissement de l'habitacle pour refroidir un habitacle par l'agent caloporteur circulant dans le premier sous-circuit.

2. Circuit d'agent caloporteur selon la revendication 1, **caractérisé en ce que** le dispositif de mélange est apte à être commuté sélectivement dans différents troisièmes états de fonctionnement pour diriger dans le deuxième sous-circuit respectivement une troisième partie, différente de la première et de la deuxième partie, et des troisièmes parties des autres troisièmes états de fonctionnement, de l'agent caloporteur s'écoulant du premier sous-circuit, et pour renvoyer dans le premier sous-circuit l'agent caloporteur s'écoulant du deuxième sous-circuit, en particulier de manière continue entre au moins deux des états de fonctionnement.

3. Circuit d'agent caloporteur selon l'une des revendications précédentes, **caractérisé en ce que** la première partie est au plus égale à 10%, notamment égale à 0%, et/ou la deuxième partie est au moins égale à 90%, notamment égale à 100%, et/ou la troisième partie d'au moins un troisième état de fonctionnement est au moins égale à 30% et/ou au plus égale à 70%.

4. Circuit d'agent caloporteur selon l'une des revendications précédentes, **caractérisé en ce que** le dispositif de mélange comprend au moins une vanne de mélange (400) ayant
- au moins une première entrée (4A) pour l'introduction d'agent caloporteur provenant du premier sous-circuit ;
- au moins une première sortie (4B) pour évacuer l'agent caloporteur dans le premier sous-circuit ;
- au moins une deuxième entrée (4C) pour introduire l'agent caloporteur provenant du deuxième sous-circuit ; et
- au moins une deuxième sortie (4D) pour évacuer l'agent caloporteur dans le deuxième sous-circuit,
qui est apte à être placé dans
- au moins une première position de commutation, dans laquelle la première entrée est reliée à la première sortie et la deuxième entrée est reliée à la deuxième sortie ;
- au moins une deuxième position de commutation, dans laquelle la première entrée est reliée à la deuxième sortie et la deuxième entrée est reliée à la première sortie ; et
- une ou plusieurs positions intermédiaires étant prévues, dans lesquelles respectivement la première entrée est reliée à la première et à la deuxième sortie et la deuxième entrée est reliée à la première et à la deuxième sortie ;
et qui comprend en particulier un organe de vanne qui est réglable, notamment de manière continue, notamment par rotation, entre la première position de commutation, la deuxième position de commutation et la ou les positions intermédiaires.

5. Circuit d'agent caloporteur selon l'une des revendications précédentes, **caractérisé en ce que** le dispositif de mélange comprend
au moins une première vanne multivoies (500) présentant
- au moins une entrée (5A) pour l'introduction d'agent caloporteur provenant du premier sous-circuit ;
- au moins une première sortie (5B) pour évacuer l'agent caloporteur dans le premier sous-circuit ; et
- au moins une deuxième sortie (5C) pour évacuer l'agent caloporteur dans le deuxième sous-circuit ; et au moins une deuxième vanne à voies multiples (600), en particulier parallèle à la première vanne à voies multiples et/ou synchronisée avec la première vanne à voies multiples, présentant
- au moins une entrée (6A) pour l'introduction de l'agent caloporteur provenant du deuxième sous-circuit ;
- au moins une première sortie (6B) pour évacuer l'agent caloporteur dans le premier sous-circuit ; et
- au moins une deuxième sortie (6C) pour évacuer l'agent caloporteur dans le deuxième sous-circuit,
la première vanne multivoies étant placée dans
- au moins une première position de commutation dans laquelle son entrée est reliée à sa première sortie ;
- au moins une deuxième position de commutation, dans laquelle son entrée est reliée à sa deuxième sortie ; et
- une ou plusieurs positions intermédiaires dans lesquelles son entrée est reliée à sa première et à sa deuxième sortie, et comprenant en particulier un organe de vanne qui est apte à être déplacé, notamment de manière continue, notamment par rotation, entre la première position de commutation, la deuxième position de commutation et la ou les positions intermédiaires ; et la deuxième vanne à plusieurs voies est placée dans
- au moins une première position de commutation, dans laquelle son entrée est reliée à sa première sortie ;
- au moins une deuxième position de commutation, dans laquelle son entrée est reliée à sa deuxième sortie ; et
- une ou plusieurs positions intermédiaires dans lesquelles son entrée est respectivement reliée à sa première et à sa deuxième sortie, et comprenant en particulier un organe de vanne qui est apte à être déplacé, notamment en continu, notamment par rotation, entre la première position de commutation, la deuxième position de commutation et la ou les positions intermédiaires.

6. Circuit d'agent caloporteur selon l'une des revendications précédentes, **caractérisé par** au moins un échangeur de chaleur (106) pour le transfert de chaleur entre le premier et le deuxième sous-circuit.

7. Circuit d'agent caloporteur selon l'une des revendications précédentes, **caractérisé par**
- un troisième sous-circuit comportant au moins un moteur électrique (301) destiné à entraîner le véhicule automobile, apte à être chauffé et/ou refroidi par l'agent caloporteur circulant dans le troisième sous-circuit et apte à être alimenté en énergie électrique par le dispositif de stockage d'énergie électrique ;
et
- un dispositif de commutation (700) qui est apte à être placé sélectivement dans
- au moins un premier état de fonctionnement pour diriger dans le troisième sous-circuit une première partie de l'agent caloporteur s'écoulant du deuxième sous-circuit ; et
- au moins un deuxième état de fonctionnement pour diriger dans le troisième sous-circuit une deuxième partie, différente de la première partie, de l'agent caloporteur s'écoulant du deuxième sous-circuit.

8. Circuit d'agent caloporteur selon la revendication 7, **caractérisé en ce que** le dispositif de commutation est apte à être commuté sélectivement dans au moins un troisième état de fonctionnement pour diriger dans le troisième sous-circuit une troisième partie, différente de la première et de la deuxième partie, d'agent caloporteur s'écoulant du deuxième sous-circuit, en particulier apte à être commuté sélectivement dans différents troisièmes états de fonctionnement pour conduire dans le troisième sous-circuit une troisième partie, différente de la première et de la deuxième partie ainsi que des troisièmes parties des autres troisièmes états de fonctionnement, de l'agent caloporteur s'écoulant du deuxième sous-circuit, et/ou est apte à être déplacé en continu entre au moins deux des états de fonctionnement.

9. Véhicule automobile, en particulier voiture de tourisme, qui présente :
- au moins un moteur électrique (301) pour entraîner le véhicule automobile ;
- un circuit d'agent caloporteur selon l'une des revendications précédentes ;
- aucun moteur à combustion interne (115), ou au moins un tel moteur, pour entraîner le véhicule automobile ; et
- aucune pile à combustible, ou au moins une telle pile à combustible, notamment pour alimenter le moteur électrique.

10. Procédé de fonctionnement d'un véhicule automobile selon la revendication 9, **caractérisé en ce que** le dispositif de mélange (400 ; 500, 600) est commuté dans le premier mode de fonctionnement et dans le deuxième mode de fonctionnement.

11. Procédé selon la revendication 10, **caractérisé en ce que** le dispositif de mélange est commuté dans ledit au moins un troisième état de fonctionnement, notamment dans plusieurs des troisièmes états de fonctionnement.
